# EUROPEAN PATENT APPLICATION

(11) **EP 2 926 653 A1**
(43) Date of publication of application: **07.10.2015**
(21) Application number: 14871175.7
(22) Date of filing: 26.04.2014
(51) Int. Cl.: A01K 87/08, A01K 87/00

(54) **FISHING POLE FOR INCREASING CASTING POWER**

(30) Priority: 18.12.2013 KR 20130157885
(71) Applicant: Jscompany. Ltd., Bucheon-si, Gyeonggi-do 421-805 (KR)
(72) Inventor: KO, Jang suk, Gwacheon-si Gyeonggi-do 427-739 (KR); KURT, Danielsson, 777 33 Smedjebacken (SE)
(74) Representative: Manitz, Finsterwald & Partner GbR
(86) International application number: PCT/KR2014/003695
(87) International publication number: WO 2015/093692

(57) **Abstract**

A fishing rod to enhance casting power is provided. The fishing rod according to the present disclosure includes a handle and a rod engaged with the handle, in which a back end of the rod is inserted into the handle, defining a space between an outer circumference of the back end of the rod and an inner circumference of the handle, and a bearing formed on the outer circumference of the back end of the rod, supported in contact with the inner circumference of the handle.

The fishing rod according to the present disclosure can advantageously allow remote distance casing with less force, as the resilience from the bending of the rod is enhanced during casting, because the rod engaged inside the handle is bent and the stress is maximized at the bearing.

## Description

### [Technical Field]

The present invention relates to a fishing rod for enhancing casting power, and more particularly, to a fishing rod which allows greater resilient bending at a joint area between a handle and the rod so as to further enhance casting distance due to the resilient bending that sufficiently utilizes wrist movement.

### [Background Art]

Generally, fishing rod is composed of a rod with decreasing diameter at one end of a handle, and a guide fastened to the outer circumference of the rod to receive a fishing line therein.

The fishing rod bends at a certain spot when the fish is biting and the feel of such bending of a fishing rod varies depending on that spot of bending. 'Taper' refers to the resilience that flexibly but firmly supports the rod when the fishing rod bends by the resisting fish at the end of the line, and it is considered the most important factor of the fishing rod. The taper is the general indication of the range, degree, angle and spot of the bending of the fishing rod, and it is the standard based on which performance and functions of the fishing rod is evaluated (e.g., whether the fishing rod is good or bad quality, or whether the fishing rod suits intended purpose or not). The balance between the rigidity and taper is determined based on the materials and design used. Accordingly, user needs to select a fishing rod by considering certain type of fish that he or she intends to catch, and the sensitivity of the fishing rod is determined according to the location the fishing rod bends and the location the resilience is recovering against the bending. Generally, there are 'fast action' and the 'slow action'. The 'fast action' refers to the rods that bend at the tip, with the resilient recovery force generated near it.

Meanwhile, the 'slow action' refers to the rods that bend at the body (i.e., center), with the resilient recovery force generated at the back. In Europe or USA, these are also called as the 'first chip action' (meaning, the tip moves fast) and the 'parabolic action' (meaning, the rod moves in a parabolic pattern), which correspond to the characteristics of the fast action and the slow action. The sensitivity of the fishing rod is selected depending on the type of fish. When fish never bites the lure or throws out the lure, in most cases, this is mainly attributable to the sensitivity of the fishing rod. The slow action rod has the center (i.e., body) that is soft and easily flexed, which means more fish biting because of less sensitivity. Further, when the fish bites, thus weighing down the fishing rod, the resilience of the body of the fishing rod weakens the resisting force of the fish. Accordingly, the fishing line does not cut easily. Compared to the 'slow action' rod, the 'fast action' rod has the resilience immediately under the tip of the fishing rod, thus allowing an angler to act right on time upon sensing 'tugging feeling' on his or her hand. However, the overall rigid sensitivity lacks resilience that can reduce resisting of the fish at the end of the line. Besides, lack of resilience can make line to cut easily. It is thus necessary to use stronger line than the 'slow action' rod.

Meanwhile, the fly fishing is an angling method that lures and catches fishes like trout or salmon trout by luring with a so-called 'fly hook' - a combination of an artificial lure made in the shape of a variety of aquatic insects with bird feathers, animal hair or yarn, with a fish hook - which is imitating living and moving small fish or flies that are inhabiting in water. An angler mounts a reel on a fly rod (i.e., fishing rod) of a predetermined length, attaches a fly hook at the end of the reeled fly line (i.e., fishing line) on the reel, and then casts the fly hook to a target spot, after which he or she lures the fish by causing the fly hook to move around as if it is alive, by rapidly reeling in the line or repeatedly pulling in the line with hands.

It is thus important that the fishing rod has to be convenient to handle, and also has a high rigidity (hereinbelow, referred to as 'action') so that the rod can bend flexibly, while firmly supporting against the resisting fish when the fish bites.

An example is disclosed in Korean Registered Patent No. 0970510, entitled 'Fishing rod'.

KR Registered Patent No. 0970510 proposes using reinforced fiber and synthetic resin to achieve bending of a long pole.

Meanwhile, a related fishing rod has insufficient bending resilience to allow one to cast to a remote distance.

That is, while it is necessary for an angler to use rotating force of his or her arm and wrist movement to cast the line to a remote spot, the related fishing rod lacks bending resilience on a handle portion and thus cannot sufficiently utilize the wrist movement at the final step.

The related fishing rod has a rod and a handle bonded to each other, and thus the handle is not connected to the bending of the fishing rod. This causes reduced casting power.

### [Disclosure]

### [Technical Problem]

The present invention has been made to solve the problems occurring in the prior art explained above, and accordingly, it is an object of the present invention to provide a fishing rod which allows formation of bending deformation on a rod engaged with an interior of a handle, thus forming greatly enhanced resilience from the bending deformation of the rod during casting, subsequently allowing an angler to cast to a remote distance using less force.

### [Technical Solution]

A technical object of the present disclosure may be achieved by providing a fishing rod which may include a handle and a rod engaged with the handle, wherein a back end of the rod is inserted into the handle, defining a space between an outer circumference of the back end of the rod and an inner circumference of the handle, and a bearing formed on the outer circumference of the back end of the rod, supported in contact with the inner circumference of the handle, in which the back end of the rod is movable in the space of the handle, thus maximizing a bending resilience of the rod.

The bearing may be protruded outwardly, into a spherical or oval shape.

A ring may be engaged with a peak, which is a most prominent portion of the bearing, and supported in contact with an inner surface of the handle.

Further, the technical object of the present disclosure may be achieved by a fishing rod which may include a handle and a rod engaged with the handle, wherein a back end of the rod is inserted into the handle, defining a space between an outer circumference of the back end of the rod and an inner circumference of the handle, a supporter formed on an inner side of an opening of the handle, and a bearing corresponding to the supporter formed on the rod, wherein the back end of the rod is movable in the space of the handle, thus maximizing a bending resilience of the rod.

The bearing may be protruded outwardly, and the supporter may have a curved surface to conform thereto, thus allowing slip motion therebetween.

The back end of the rod may have a shape selected between a shape that has a uniform thickness without variation in diameter throughout to the back end, and a shape that has a decreased thickness from a front end to the back end.

The secondary pipe may be removal engaged for replacement thereof, and may have a shape selected between a shape that has a same thickness as the rod, and a shape that has a decreased thickness from a front end to the back end.

A nut member may be engaged with the back end of the rod, with a finishing opening being screw-engaged with the nut member.

A finishing opening may be engaged with the back end of the handle and may have a boss formed therein, in which the back end of the rod, which is engaged inside, is engaged with the boss and fixed in position.

A grip member may be engaged with an outer surface of the handle, and this may be configured as a curved surface, or in a polygonal shape.

### Effect of the Invention

According to embodiments, the rod connected to the interior of the handle is bent, thus maximizing stress at the bearing, which extends the bending of the rod to the rod within the handle during casting. Accordingly, bending resilience is greatly enhanced, which leads into increased casting distance and increased casting power.

### [Brief Description of the Drawings]

FIG. 1 is cross sectional view of a fishing rod according to a first embodiment of the present disclosure.
FIG. 2 is a cross sectional view illustrating operation of FIG. 1.
FIG. 3 is a cross sectional view of a fishing rod according to a second embodiment of the present disclosure.
FIG. 4 is a cross sectional view illustrating the operation of FIG. 3.
FIG. 5 is a cross sectional view of a fishing rod according to a third embodiment.
FIG. 6 is a cross sectional view illustrating the operation of FIG. 5.
FIG. 7 illustrates a 'back end (B) of rod' and 'secondary pipe 700' for application in the first to third embodiments of the present disclosure.

### [Mode for Embodying the Invention]

Hereinafter, the present invention will be explained in more detail with reference to the following Examples.

### [First embodiment]

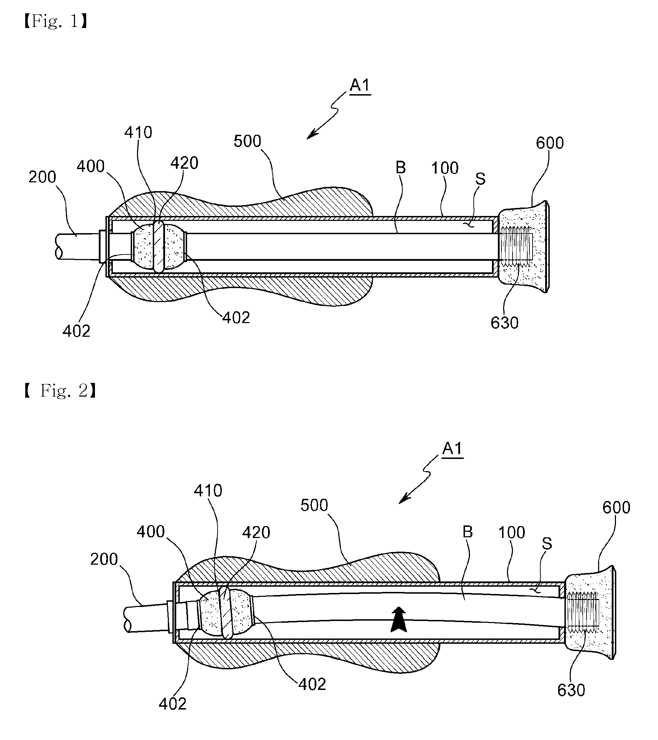

Referring to FIGS. 1 and 2, a fishing rod (A1) according to a first embodiment of the present disclosure includes a handle 100 and a rod 200 engaged with the handle 100, in which a back end (B) of the rod 200 is inserted into the handle 100, defining a space (S) between outer circumference of the back end (B) of the rod 200 and inner circumference of the handle 100, and a bearing 400 formed on the outer circumference of the back end (B) of the rod 200 supported in contact with the inner circumference of the handle 100.

The bearing 400 is generally formed into a spherical or oval shape, with a ring 420 engaged with a peak (i.e., most prominent portion) of the bearing 400. An annular groove 410 is formed in the peak of the bearing 400 to receive the ring 420 therein.

The ring 420 is in contact with the inner circumference of the handle 100.

The bearing 400 and the ring 420 are formed of plastic, rubber, or metal material.

The handle 100 is generally in a pipe shape having an inner diameter considerably larger than an outer diameter of the back end (B) of the rod 200 so as to define a space.

A curved grip member 500 is engaged with the outer surface of the handle 100 to provide good grip to a user who holds the handle 100 with his or her hand.

The grip member 500 may preferably be formed of a material that can prevent sliding, and may be selected from among cork, rubber and synthetic resin.

The grip member 500 may be curved inward at the middle portion, forming overall shape resembling '8', thus providing enhanced grip and preventing sliding of the handle 100 which is quite likely during casting. The grip member 500 may be formed in a polygonal shape, and when formed in a hexagonal or pentagonal shape, control on the fishing rod is improved, because the grip member 500 hardly moves in hand.

Further, the handle 100 has an opening on a front end, penetrating the space (S) formed inside, and another opening formed on a back end, through which the back end (B) of the rod 200 is protruded. A fishing opening 600 is engaged with the back end (B) of the rod 200 in the protruded state as mentioned above.

The rod 200 is a pipe formed of carbon fiber material to reduce weight, and is formed in a shape that becomes more slender toward the tip of the front end. The back end (B) is engaged with the handle 100.

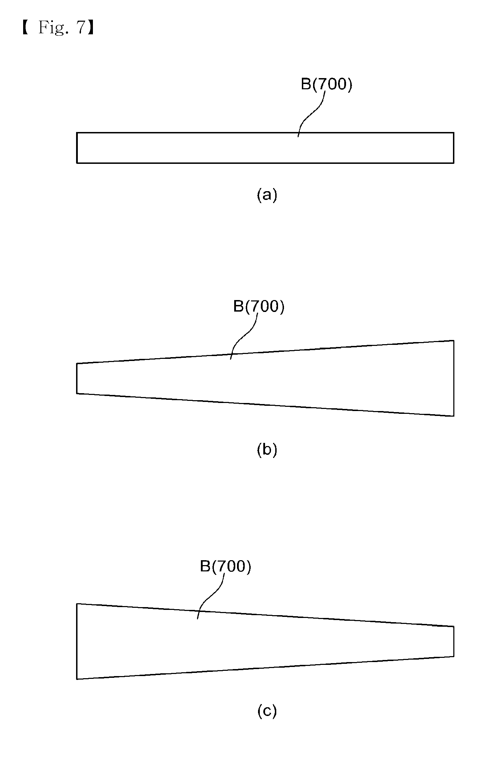

As illustrated in FIG. 7, the back end (B) of the rod 200 may be selected between a shape that maintains the uniform diameter throughout to the back end, and a shape that is increased in thickness therealong toward the back end or decreased in thickness from the front end toward the back end.

A portion of the rod 200, which is in the vicinity to the opening of the handle 100, is engaged with the bearing 400.

The bearing is formed in a spherical or oval shape. When engaged with the rod 200, the bearing 400 is engaged with both ends and fixed in position by force-fitting and with adhesive.

A ring 420 is formed around the peak of the bearing 400, and the ring 40 is supported in contact with the inner circumference of the handle 100.

The operation of the first embodiment of the present disclosure configured as described above will be explained below.

During casting, as illustrated in FIG. 2, the ring 420 of the bearing 400 acts as a fulcrum of a sort of leverage, thus further maximizing the bending of the rod 200. Accordingly, even larger resilience is allowed.

As described, as the resilience is enhanced, casting to an even remoter distance is enabled.

### [Second embodiment]

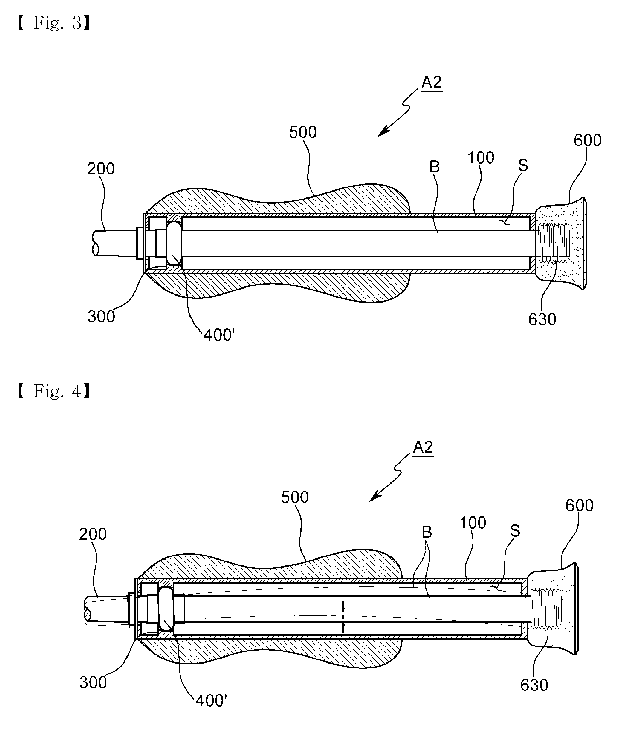

As illustrated in FIGS. 3 and 4, the fishing rod (A2) according to a second embodiment of the present disclosure includes a handle 100 and a rod 200 engaged with the handle 100, in which a back end (B) of the rod 200 is inserted into the handle 100, defining a space (S) between the outer circumference of the back end (B) of the rod 200 and the inner circumference of the handle 100.

A supporter 300 is formed on an inner side of the opening of the handle 100, and a bearing 400' corresponding to the supporter 300 is formed on the rod 200.

Accordingly, the back end (B) of the rod 200 is movable in the space (S) of the handle 100 by the slip motion of the bearing 400', and the bending resilience of the rod 200 is maximized.

The respective configurations described above will be explained in detail below.

The handle 100 has a general pipe shape which has an inner diameter that is considerably larger than the outer diameter of the back end (B) of the rod 200 so as to define a space.

A curved grip member 500 is engaged with the outer surface of the handle 100 to provide good grip to a user who holds the handle 100 with his or her hand.

The grip member 500 may preferably be formed of a material that can prevent sliding, and may be selected from among cork, rubber and synthetic resin.

The grip member 500 is preferably formed in such a shape that is increased in thickness from the front end to the back end. This shape (i.e., increased in thickness toward the back end) can prevent sliding which is quite likely during casting (i.e., while the angler is flicking the fishing rod.). The grip member 500 may be formed in a polygonal shape and when formed in a hexagonal or pentagonal shape, control on the fishing rod is improved, because the grip member 500 hardly moves in hand.

The handle 100 has an annular supporter 300 formed on the inner circumference of the handle 100, i.e., on the inner circumference in the vicinity to the opening of the front end.

The supporter 300 is engaged with the bearing 400' to support the bearing 400', in which the inner surface is curved to conform to the shape of the outer surface of the bearing 400', thus inducing slip motion of the bearing 400'.

The rod 200 is a pipe formed of carbon fiber material to reduce weight, and is formed in a shape that becomes more slender toward the tip of the front end. The back end (B) is engaged with the handle 100.

As illustrated in FIG. 7, the back end (B) of the rod 200 may be selected between a shape that maintains the uniform diameter throughout to the back end, and a shape that is increased in thickness therealong toward the back end or decreased in thickness from the front end toward the back end.

The bearing 400' is formed on a portion of the rod 200, which is in the vicinity to the opening of the handle 100.

The bearing 400' is formed of flexible plastic or metal material, has an annular shape which has a cross section outwardly protruding into a dome shape, and is supported in contact with the curved surface of the supporter 300.

Accordingly, as illustrated in FIG. 4, the bearing 400' acts as a fulcrum of a sort of leverage, thus further maximizing the bending of the rod 200.

In addition to the bending action of the rod 200, the bearing 400' also tilts to a predetermined angle. Accordingly, added with the slip motion, the rod 200 bends to the maximum degree and far greater resilience can be provided.

The finishing opening 600' is engaged with the opening of the back end of the handle 100 of the fishing rod. A boss 620 is formed inside the finishing opening 600, and the boss 620 is engaged and fixed with the opening of the back end of the rod 200, 200a.

The finishing opening 600' may be engaged with the opening of the back end of the handle 100 and fixed by adhesion, or may be maintained in the fixed state by being bonded and then fastened with a piece (not illustrated).

### [Third embodiment]

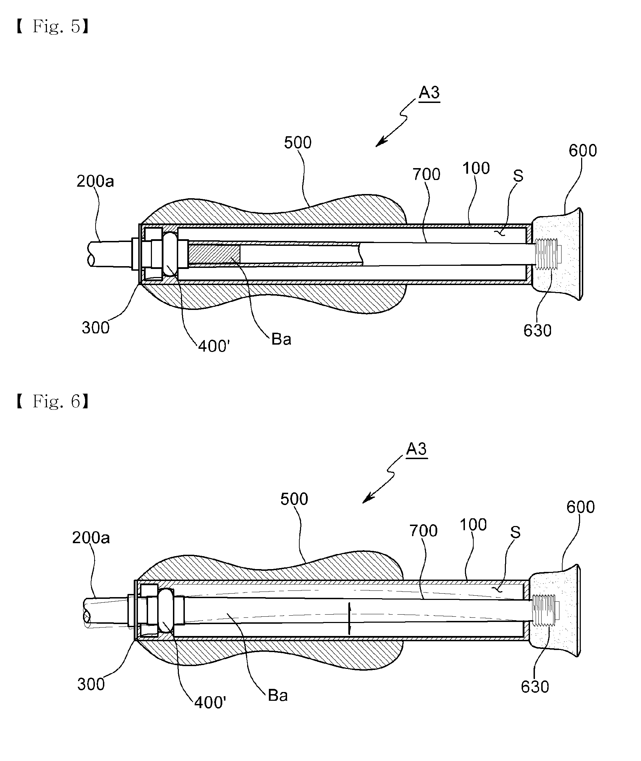

As illustrated in FIGS. 5 and 6, the fishing rod (A3) according to a third embodiment of the present disclosure includes a handle 100 and a rod 200a engaged with the handle 100, in which a back end (Ba) of the rod 200a is inserted into the handle 100, defining a space (S) between the outer circumference of the back end (Ba) of the rod 200a and the inner circumference of the handle 100, a supporter 300 formed on an inner side of the opening of the handle 100, a bearing 400 corresponding to the supporter 300 is formed on the rod 200a, and a secondary pipe 700 of which one end is engaged with the back end (Ba) of the rod 200a, and which is engaged with the space (S) of the handle 100.

Accordingly, the back end (B) of the rod 200a is movable in the space (S) of the handle 100 by the slip motion of the bearing 400, and the bending resilience of the rod 200a is maximized.

Further, the rod 200a may have uniform thickness throughout to the back end that is inserted in the inner space (S) of the handle 100.

The secondary pipe 700 is engaged with the back end (Ba) of the rod 200a having the uniform thickness as mentioned above, and it is preferable that the front end of the secondary pipe 700 is engaged in the vicinity to the bearing 400 of the rod 200a.

Accordingly, a wider gap is ensured between the back end of the secondary pipe 700 and the space (S) at the back end inside the handle 100, than the front end of the secondary pipe 700, and the back end (B), which is subjected to the greatest deformation upon bending of the rod 200, can sufficiently accommodate the bending angle of the rod 200 due to the wide gap between the back end of the secondary pipe 700 and the space at the back end inside the handle 100, as described above.

As a result, the rod 200 can bend at a wider angle, thus allowing enhanced bending resilience and in turn, allowing a user to cast to a remoter distance.

Additionally, it is preferable that the secondary pipe 700 is removably engaged for replacement thereof.

As illustrated in FIG. 7, the secondary pipe 700 may either have a shape having the same thickness as the rod 200, or a shape that is increased in thickness therealong to the back end or decreased in thickness from the front end to the back end.

Meanwhile, the fishing rod according to the first to third embodiments described above is engaged with either the back end (B) of the rod 200 protruded through the opening at the back end of the handle 100, or with the finishing opening 600 of the secondary pipe 700.

That is, a nut member 630 is engaged with the back end (B) of the rod 200 or with the back end of the secondary pipe 700. The nut member 630 has a thread formed on an outer circumference thereof, and is fixed with the back end of the rod or the secondary pipe 700 by adhesion.

The finishing opening 600 has an engagement hole having a thread formed on an inner circumference thereof, for screw engagement with the nut member 630, and is formed to be thicker toward the end.

The nut member 630 may be engaged without requiring the fastening of the finishing opening 600, in which case the nut member 630 may be passed through the handle, engaged with a pin (not illustrated), and then engaged with the back end (B) of the rod 200 therein or the secondary pipe 700, and fixed in position.

### [Fourth embodiment]

Meanwhile, the fishing rod (A3) according to a fourth embodiment of the present disclosure includes a handle 100 and a rod 200 engaged with the handle 100, in which a back end (B) of the rod 200 is inserted into the handle 100, defining a space (S) between the outer circumference of the back end (B) of the rod 200 and the inner circumference of the handle 100, a bearing 400 formed on the outer circumference of the back end (B) of the rod 200 supported in contact with the inner circumference of the handle 100, and a secondary pipe 700, of which one end is engaged with the back end (B) of the rod 200, and which is engaged with the space (S) of the handle 100.

The bearing 400 is generally formed into a spherical or oval shape, with a ring 420 engaged with a peak (i.e., most prominent portion) of the bearing 400. An annular groove 410 is formed in the peak of the bearing 400 to receive the ring 420 therein.

The ring 420 is in contact with the inner circumference of the handle 100.

The bearing 400 and the ring 420 are formed of plastic, rubber, or metal material.

Accordingly, because the back end (B) of the rod 200 is movable in the space (S) of the handle 100, the bending resilience of the rod 200 is maximized. Further, the rod 200 may be formed to have the uniform thickness therealong to the back end inserted into the space (S) in the handle 100.

It is preferable that the secondary pipe 700 is engaged with the back end (B) of the rod 200 having the uniform thickness as mentioned above, and that the front end of the secondary pipe 700 is engaged in the vicinity to the bearing 400 of the rod 200.

Accordingly, a wider gap is ensured between the back end of the secondary pipe 700 and the space (S) at the back end inside the handle 100, than the front end of the secondary pipe 700, and the back end (B), which is subjected to the greatest deformation upon bending of the rod 200, can sufficiently accommodate the bending angle of the rod 200 due to the wide gap between the back end of the secondary pipe 700 and the space at the back end inside the handle 100, as described above.

As a result, the rod 200 can bend at a wider angle, thus allowing enhanced bending resilience and in turn, allowing a user to cast to a remoter distance.

Additionally, it is preferable that the secondary pipe 700 is removably engaged for replacement thereof.

As illustrated in FIG. 7, the secondary pipe 700 may either have a shape having the same thickness as the rod 200, or a shape that is increased in thickness therealong to the back end or decreased in thickness from the front end to the back end.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

### Industrial Applicability

The present disclosure relates to a fishing rod to enhance casting power and is applicable to fishing.

## Claims

1. A fishing rod comprising:
a handle and a rod engaged with the handle, wherein a back end of the rod is inserted into the handle, defining a space between an outer circumference of the back end of the rod and an inner circumference of the handle; and
a bearing formed on the outer circumference of the back end of the rod, supported in contact with the inner circumference of the handle, wherein
the back end of the rod is movable in the space of the handle, thus maximizing a bending resilience of the rod.

2. The fishing rod of claim 1, wherein the bearing is in a spherical or oval shape.

3. The fishing rod of claim 1, wherein a ring is engaged with a peak, which is a most prominent portion of the bearing, and supported in contact with an inner surface of the handle.

4. A fishing rod comprising:
a handle and a rod engaged with the handle, wherein a back end of the rod is inserted into the handle, defining a space between an outer circumference of the back end of the rod and an inner circumference of the handle;
a supporter formed on an inner side of an opening of the handle; and
a bearing corresponding to the supporter formed on the rod, wherein the back end of the rod is movable in the space of the handle, thus maximizing a bending resilience of the rod.

5. The fishing rod of claim 4, wherein the bearing is protruded outwardly, and the supporter has a curved surface to conform thereto, thus allowing slip motion therebetween.

6. The fishing rod of claim 1 or 4, comprising a secondary pipe engaged with the back end of the rod, and formed within the space of the handle.

7. The fishing rod of claim 6, wherein the secondary pipe has a shape selected between a shape that has a same thickness as the rod, and a shape that has a decreased thickness from a front end to the back end.

8. The fishing rod of claim 1 or 4, wherein the back end of the rod has a shape selected between a shape that has a uniform thickness without variation in diameter throughout to the back end, and a shape that has a decreased thickness from a front end to the back end.

9. The fishing rod of claim 1 or 4, wherein a nut member is engaged with the back end of the rod, with a finishing opening being screw-engaged with the nut member.

10. The fishing rod of claim 1 or 4, wherein a finishing opening is engaged with the back end of the handle and has a boss formed therein, wherein the back end of the rod, which is engaged inside, is engaged with the boss and fixed in position.

11. The fishing rod of claim 1 or 4, wherein a grip member in a polygonal shape is engaged with an outer surface of the handle.
